# EUROPÄISCHE PATENTSCHRIFT

(11) **EP 0 568 900 B1**
(45) Veröffentlichungstag und Bekanntmachung des Hinweises auf die Patenterteilung: **05.03.1997**
(21) Anmeldenummer: 93106782.1
(22) Anmeldetag: 27.04.1993
(51) Int. Cl.: B60N 2/06

(54) **Raumsparendes Gleitschienensystem mit zwei U-förmigen Schienen, insbesondere für Kraftfahrzeuge**
Space saving sliding rail system with two U-shaped slides, in particular for motor vehicle seats
Système à deux glissières de forme en U à encombrement réduit, en particulier pour sièges de véhicules automobiles

(30) Priorität: 02.05.1992 DE 4214684
(43) Veröffentlichungstag der Anmeldung: 10.11.1993
(73) Patentinhaber: ITT Automotive Europe GmbH, 60488 Frankfurt (DE)
(72) Erfinder: Shafry, Gavriel, W-5882 Meinerzhagen (DE); Menne, Hans G., W-5275 Bergneustadt 1 (DE)
(74) Vertreter: Portwich, Peter

(56) Entgegenhaltungen:
- EP-A- 0 123 601
- EP-A- 0 394 892
- DE-A- 3 915 816
- FR-A- 1 045 087
- FR-A- 2 310 239
- FR-A- 2 606 338
- GB-A- 2 100 594
- GB-A- 2 219 933
- US-A- 4 533 107

## Beschreibung

Die Erfindung betrifft ein Gleitschienensystem für die Längsführung eines Sitzes, insbesondere Kraftfahrzeugsitzes, wobei eine mit dem Fahrzeugsitz verbundene Oberschiene mit einer am Fahrzeugboden fixierten Unterschiene in Längsrichtung der Schiene gleitend verbunden ist.

Aus der DE-A-3 915 816 oder EP-A-394 892 sind beispielsweise Schienensysteme bekannt, bei welchen jeweils die eine Schiene die andere derart umfaßt, daß ein in der Regel größerer in sich geschlossener Raum entsteht. Zumindest die Oberschiene besitzt dann üblicherweise einen einzelnen, nach oben ragenden Schenkel, an dem dann der Kraftfahrzeugsitz und/oder Mittel zum Antrieb der Oberschiene befestigt sind. Der herausstehende Schenkel der Oberschiene ist vielfach nicht mittig angeordnet und kann aufgrund seiner Länge zu erheblichen, auf die Schienenlagerung wirkenden Querkräften führen.

Aus der US-A-4 533 107 ist ein Gleitschienensystem bekannt, bei welchem zwar der von der Unterschiene aufgespannte Hohlraum fast vollständig von einem Teil der Oberschiene und von Rollen- und Kugellagerungen ausgefüllt ist. Aber auch diese Oberschiene weist zur Sitzbefestigung einen einzigen aus der Unterschiene heraus nach oben ragenden Schenkel auf, welcher allein alle Querkräfte aufnehmen muß.

Die GB-A-2 219 933 beschreibt hingegen ein Gleitschienensystem der eingangs genannten Art, dessen Oberschiene zwei parallel aus der Unterschiene nach oben herausragende Schenkel aufweist, welche an ihren Oberkanten miteinander durchgängig verbunden sind und somit einen nach vorn und hinten offenen langgestreckten Hohlraum einschließen. In diesen Hohlraum ragt von vorn ein Hebel, welcher eine Längsverstellvorrichtung betätigt. Da die Längsverstellvorrichtung etwa in der Mitte der Oberschiene angeordnet ist, muß der Hebel entsprechend lang sein, um aus dem Hohlraum herauszuragen. Zwar können die zwei den Hohlraum begrenzenden Schenkel größere Seitenkräfte aufnehmen als ein einziger, es geht aber durch die Unzugänglichkeit des Hohlraums viel Platz verloren. Eine zusätzliche Vertikalverstellung des Sitzes beispielsweise müßte außerhalb des Gleitschienensystems untergebracht werden.

Aus der FR-A-2 606 338 ist ein weiteres Gleitschienensystem bekannt, bei welchem die Oberschiene einen vertikalen Schenkel zur Aufnahme der Querkräfte aufweist. Eine Vorrichtung zur Sitzhöhenverstellung ist von außerhalb der Oberschiene an diesem Schenkel befestigt.

Die Erfindung geht daher aus von einem Gleitschienensystem der sich aus dem Oberbegriff des Anspruchs 1 ergebenden Gattung und hat sich zur Aufgabe gestellt, ein Schienensystem vorzuschlagen, welches bei raumsparendem einfachen Aufbau erhebliche Kräfte aufzunehmen in der Lage ist.

Die Aufgabe wird durch die sich aus dem kennzeichnenden Teil des Anspruchs 1 ergebende Merkmalskombination gelöst. Die Erfindung besteht im Prinzip also darin, zwei nach oben offene Schienen ineinander zu schachteln, so daß die Öffnungen in die gleiche Richtung weisen, wobei die Seitenflächen im wesentlichen parallel zueinander verlaufen. Hierdurch ergibt sich eine relativ breite Anlagefläche der Schienen gegeneinander, so daß größere Querkräfte ohne Schwierigkeiten aufgenommen werden können. Durch die Öffnung der Oberschiene nach oben ist gleichzeitig ein vergleichsweise großer, leicht zugänglicher Raum entstanden, in dem zusätzliche Bauelemente zur Verstellung des Sitzes in vertikaler Richtung ohne Schwierigkeiten untergebracht werden können.

Um das Ausheben der Oberschiene aus der Unterschiene in einfacher Weise verhindern zu können, empfehlen sich in Weiterbildung der Erfindung die Maßnahmen nach Anspruch 2. Zur Montage des Schienensystems wird dabei die Oberschiene in die Unterschiene eingeschoben. Hierbei wird durch die hintereinander greifenden Vorsprünge auch die notwendige Gegenkraft erzeugt, die für den Antrieb der Oberschiene und damit des Sitzes notwendig ist.

Um in einfacher Weise eine Zentrierung der Oberschiene gegenüber der Unterschiene zu erreichen und somit die seitliche Belastung der Schienen gegeneinander herabzusetzen, empfiehlt sich in Verbesserung der Erfindung die Anwendung der Merkmalskombination nach Anspruch 3. Außerdem trägt die einen Widerhaken ähnliche Anordnung der Vorsprünge zu einem verbesserten Festigkeitverhalten und einer verbesserten Führung der Oberschiene in der Unterschiene bei, indem die Auflagefläche der Vorsprünge gerade an der Seite vergrößert wird, an der die größeren Kräfte auftreten.

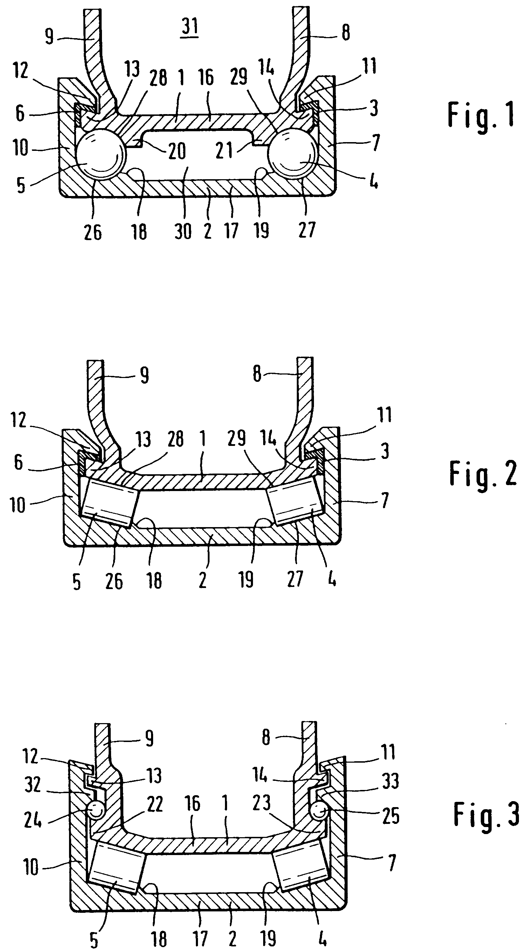

Um bei einer in Ausheberichtung auftretenden Kraft die Führung der Schienen gegeneinander zu verbessern, kann man vorzugsweise die Merkmalskombination nach Anspruch 4 anwenden. Dabei können die Gleitmittel entsprechend Anspruch 5 aus einem Gleitwinkel bestehen, der aus einem gut gleitenden Material gefertigt auf den Vorsprung der Unterschiene oder Oberschiene aufgesetzt ist. Die Gleitmittel können aber auch entsprechend der Merkmalskombination nach Anspruch 11 durch Wälzkörper, beispielsweise Kugeln, gebildet sein (Fig. 3).

Um den Lauf der Oberschiene auf der Unterschiene bei der üblichen von oben nach unten gerichteten Kraft in einfacher Weise zu verbessern, empfiehlt sich die Anwendung der Merkmalskombination nach Anspruch 6.

Dabei läßt sich eine zusätzliche Zentrierung der Oberschiene gegenüber der Unterschiene durch die Anwendung der Merkmalskombination nach Anspruch 7 erreichen. Durch die seitliche Anordnung der Laufflächen im Bereich der beiden Seitenschenkel der Unterschiene entsteht, insbesondere bei der Verwendung U-förmiger Schienen, ein nutzbarer Innenraum, der zu Zwecken der Befestigung, aber auch zur Aufnahme von Getrieben und ähnlichem verwendet werden kann. Die seitliche Anordnung der Wälzkörper kann gleichzeitig aber auch noch, insbesondere bei der Verwendung von Kugeln, zu einer reibungsarmen seitlichen Abstützung der beiden Schienen zueinander ausgenutzt werden.

Ein seitliches Auswandern der Wälzkörper zur Mitte der Mittelschenkel hin, läßt sich durch die Verwendung der Merkmale nach Anspruch 8 in einfacher Weise verhindern.

Insbesondere bei der Anwendung von Kugeln als Walzkörper, die gleichzeitig zur seitlichen Abstützung der Schienen zueinander dienen, empfiehlt sich die Verwendung der Merkmalskombination nach Anspruch 9.

In Verbesserung der Erfindung lassen sich die Wälzkörper in Längsrichtung der Unterschiene leicht durch die Nutzung der Merkmale nach Anspruch 10 im Abstand zueinander halten. Das gilt sowohl für die Wälzkörper zwischen den Vorsprüngen als auch die Wälzkörper zwischen den Mittelschenkeln, der im wesentlichen U-förmigen Schienen.

Durch Maßnahmen nach Anspruch 12 läßt sich der in der Oberschiene zur Verfügung stehende Bauraum noch vergrößern, wobei gleichzeitig noch für eine seitliche Abstützung gegenüber den Wälzkörpern gesorgt werden kann, die an dem mittleren Schenkel angreifen. Wichtig dabei ist es, daß in vorteilhafter Weiterbildung der Erfindung hier die in Anspruch 11 vorgeschlagenen Maßnahmen beachtet werden.

Die bei einer U-förmigen Ausgestaltung der Unterschiene entstehende breite Auflagefläche läßt sich vorteilhaft zur Befestigung der Unterschiene am Fahrzeugboden gemäß den Merkmalen nach Anspruch 13 ausnutzen.

Ein Ausführungsbeispiel der Erfindung wird nachfolgend anhand der Zeichnung erläutert. Darin zeigt
- Fig. 1: eine erste Ausführungsform der Erfindung,
- Fig. 2: eine gegenüber Fig. 1 geringfügig abgeänderte zweite Ausführungsform der Erfindung und
- Fig. 3: eine dritte Ausführungsform der Erfindung.
- Fig. 4: eine vierte Ausführungsform der Erfindung,
- Fig. 5: eine fünfte Ausführungsform der Erfindung.

In Fig. 1 ist eine im wesentlichen U-förmige Unterschiene 2 gezeigt, die durch ein Strangpreßverfahren aus einem geeigneten Material, wie beispielsweise Aluminium, hergestellt sein kann. Aus dem in Fig. 1 dargestellten Querschnitt der Unterschiene 2 ist zu entnehmen, daß diese zwei kreissektorförmig gebogene Lagerflächen 26,27 aufweist, in der zwei als Kugeln ausgestaltete Wälzkörper 4,5 geführt sind. Die Kugeln sitzen in Längsrichtung der Unterschiene 2 im Abstand zueinander, wobei die Abstände beispielsweise durch Zwischenglieder erzwungen werden können, die einen Käfig bilden.

Um ein Wandern der Kugeln 4,5 in Richtung der Mittelebene der Unterschiene 2 zu verhindern, sind seitlich der Lagerflächen nach oben ragende Vorsprünge 18,19 vorgesehen.

Auf den Kugeln 4,5 laufen über den Lagerflächen 26,27 entsprechende weitere Lagerflächen 28,29 einer Oberschiene 1. Zur seitlichen Abstützung dienen dabei die nach unten ragenden Vorsprünge 20,21, die den Vorsprüngen 18,19 entsprechen.

Die beiden Schienen 1,2 sind im wesentlichen U-förmig, wobei sich an den Mittelschenkel 17 der Unterschiene 2 sich die beiden Seitenschenkel 7,10 anschließen und an den Mittelschenkel 16 der Oberschiene 1 die beiden Seitenschenkel 8,9 anschließen.

Um ein Ausheben der Oberschiene 1 aus der Unterschiene 2 zu verhindern, besitzt die Unterschiene seitlich schräg nach oben ragende Vorsprünge 13,14, die von schräg nach innen ragenden Vorsprüngen 11,12 der Unterschiene umfaßt werden. Um für den Fall, daß eine Kraft in Ausheberichtung wirkt, ein besseres Gleitverhalten zu erzeugen, sind zwischen den Vorsprüngen 12,13 bzw. 14,11 Gleitmittel 3,6 eingefügt, die in Fig. 1 als Gleitwinkel ausgestaltet sind. Diese Gleitwinkel sind aus einem reibungsarmen Material gefertigt, welches gegenüber dem Werkstoff der Schienen eine geringe Gleitreibung hat.

Wie aus Fig. 1 gut ersichtlich, werden durch den erfindungsgemäßen Aufbau des Gleitschienensystems sowohl ein im wesentlichen von den Mittelschenkeln 16,17 und den Seitenschenkeln 7,10 umschlossener Raum 30 sowie ein durch den Mittelschenkel 16 und die Seitenschenkel 8,9 gebildeter, nach oben offener Raum 31 gebildet. Der untere geschlossene Raum 30 kann zur Aufnahme zumindest eines Teils der Befestigungsmittel dienen, mit denen die Unterschiene 2 am Boden des Fahrzeugs befestigt ist. Auch kann in den geschlossenen Raum 30 ein gegenüber der Unterschiene 2 ortsfester Antrieb ragen, welcher mit sich in den Raum 30 erstreckenden Antriebsmitteln, wie beispielsweise einer Spindel oder Zahnstange zusammenwirkt, die an der Oberschiene 1 befestigt ist. Die Befestigung von Antriebsmotor und Spindel bzw. Zahnstange läßt sich hinsichtlich der Schienen vertauschen.

Entsprechendes gilt auch für den nach oben offenen Raum 31. Dort können allerdings auch noch Getriebe untergebracht sein, die in Richtung der Sitzfläche des Kraftfahrzeugsitzes wirken, beispielsweise um ihn vertikal anzuheben. Dies kann beispielsweise auch über eine Rampe geschehen. Die beiden Seitenschenkel 8 und 9, die selbstverständlich auch sehr viel kürzer, als in Fig. 1 dargestellt, ausgeführt sein können, sorgen für den seitlichen Halt derartiger Mittel.

Die Oberschiene 1 kann wiederum durch ein Strangpreßverfahren spanlos geformt sein und ebenfalls aus Aluminium bestehen.

Fig. 2 unterscheidet sich von Fig. 1 im wesentlichen durch die Verwendung von walzenförmigen Wälzkörpern 4,5, anstatt der in Fig. 1 angewandten Kugeln. Die Wälzkörper haben Kreiszylinderform, denen die Lagerflächen 26 bis 29 entsprechend angepaßt sind. Die Lagerflächen 26 bis 29 sind weiterhin jeweils schräg nach innen geneigt, um eine Zentrierung der Oberschiene 1 gegenüber der Unterschiene 2 zu erreichen. Nach oben ragende Vorsprünge 18,19 sorgen dafür, daß sich die Walzen 4,5 nicht zur Mittelebene der Unterschiene 2 verschieben können.

Die Abweichung der Ausgestaltung nach Fig. 3 besteht im wesentlichen in dem Austausch der winkelförmigen Gleitmittel 3,6 durch kugelförmige Gleitmittel 24,25. Diese Kugeln sind zwischen entsprechenden Laufflächen der Vorsprünge 22,23 bzw. 32,33 der Oberschiene 1 bzw. Unterschiene geführt, wobei sie sowohl in vertikaler als auch in seitlicher Richtung für eine Abstützung der Schienen gegeneinander sorgen. Zur zusätzlichen Sicherheit dienen noch die ineinandergreifenden Vorsprünge 12,13 bzw. 11,14, wie im Zusammenhang mit Fig. 1 schon erläutert, nur daß in Fig. 3 auf die Gleitmittel 3,6 verzichtet wurde.

Im Rahmen der Erfindung können neben den beschriebenen Zylinderrollen und Kugeln auf faßförmige Rollen oder beliebige andere Wälzkörper verwendet werden. Die Gleitelemente können ferner aus Kunststoff, Metall, Sintermaterial oder deren Kombinationen bestehen und beschichtet oder massiv aus diesem Material geformt sein.

Zusammenfassend läßt sich daher folgendes sagen. Unter den Fahrsitzflächen ist nur ein beschränktes Volumen vorhanden, in dem eine Menge mechanischer Bauteile, elektrischer Antrieb und deren Steuerung sowie Schienen unterzubringen sind. Durch die Erfindung wird eine vergrößerte Integration der beiden Schienen, wie auch ein verbesserter Kraftfluß und eine höhere Festigkeit erreicht. Die Vorteile der Erfindung bestehen insbesondere in der besseren Ausnutzung des vorhandenen Volumens. Die Schienen dürfen nämlich größere Dimensionen und damit auch eine höhere Festigkeit annehmen, wobei der Gesamtvolumenbedarf sinkt. Besonders vorteilhaft ist die Integration von Bauteilen der vertikalen Verstellung in die Schiene. In diesem Falle werden die Getriebe und Hebel für die Vorder- und Hinterkantverstellungen zwischen die Schenkel der Oberschiene möglichst mittig angebracht, um einen besseren Kraftfluß zu erreichen. Dies ist umso besser, wenn die Anbindung zum Sitzoberteil und Fahrzeugboden ebenfalls mittig zu der Schiene angeordnet ist. Hierdurch verhindert man Kippmomente, die sonst bei herkömmlichen Konstruktionen vielfach auftreten.

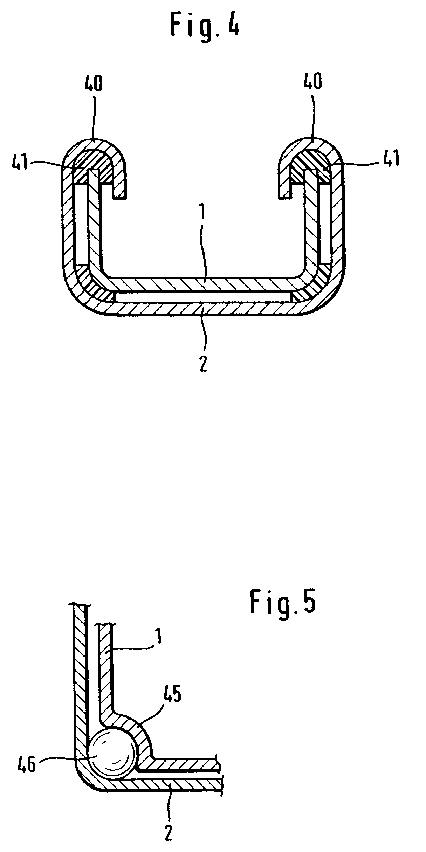

Fig. 4 zeigt eine vierte Ausführungsform der Erfindung, bei der die beiden ineinander geführten Schienen aus geprägten oder gezogenen Blechformteilen gebildet sind. Um die Schienenteile gegeneinander zu führen und gleichzeitig in geeignetem Abstand zu halten, dienen Gleitelemente, vorzugsweise aus Kunststoff, wobei Material verwendet werden kann, wie es auch im Zusammenhang mit Fig. 1 und Fig. 2 zum Einsatz kommt. Dabei können, um ein Verschieben der Gleitelemente gegenüber den Schienen zu verhindern, diese gegenüber einer der Schienen fixiert sein, beispielsweise durch Kleben oder Vulkanisieren. Die beiden Schienene 1 und 2 haben einen gleichbleibenden Durchmesser, da sie, wie weiter oben schon erläutert, aus Blech geformt sind. Wie aus Fig. 4 ersichtlich, sind die sich längs der Schienen erstreckenden Gleitelemente an den Stoßkanten und Enden der Schiene 1 und an den zugeordneten Stellen der Schiene 2 wirksam. Dabei müssen die Gleitmittel sich nicht notwendigerweise über die gesamte Schiene erstrecken, sondern können in Abständen stückweise vorgesehen sein. Auch die umfassenden Bögen 40 der Schiene 2 müssen sich nicht über die gesamte Länge dieser Schiene erstrecken, sondern es können auch einzelne im Abstand zueinander angeordnete Teilbögen Verwendung finden, denen entsprechende Teilstücke der Gleitkörper 41 zugeordnet sind. In diesem Falle werden die Gleitelemente 41 gegenüber den Teilbögen 40 fixiert, so daß die Schiene 1 in ihrer gesamten Längserstreckung im wesentlichen die gleiche Form hat. Es ist aber auch eine Umkehr dieses Verfahrens möglich, indem auf einzelnen im Abstand zueinander befindlichen Vorsprüngen an den Enden der Schiene 1 Gleitkörper 41 aufsitzen, die sich zusammen mit der Schiene 1 entlang der über die gesamte Schiene 2 gleichförmigen Bögen 40 bewegen. Die Lösung gemäß Fig. 4 bildet eine besonders einfache und preiswerte Variante des erfindungsgemäßen Schienensystems.

Bei der Verwendung von geformten Blechformteilen lassen sich aber nicht nur Gleitelemente, sondern auch Wälzlager einsetzen, wie sie beispielsweise im Zusammenhang mit einem nur abschnittsweisen Schienensystem in Fig. 5 gezeigt sind. Die Krümmung 45 der Schiene 1 kann dabei auch gleichzeitig als Käfig und Kugelpfanne für die Kugel 46 dienen, so daß hierdurch eine Längsbewegung der Kugel 46 entlang der Schiene 1 verhindert wird, sondern diese auf der Schiene 2 abrollt. Es können aber auch Gleitelemente und Wälzkörper gemäß Fig. 5 miteinander kombiniert werden.

## Patentansprüche

1. Gleitschienensystem für die Längsführung eines Sitzes, insbesondere eines Kraftfahrzeugsitzes, mit einer Ober- und einer Unterschiene (1,2), wobei die Oberschiene am Sitzoberteil befestigt ist und mittels Gleitelementen in der Unterschiene (2) geführt ist, wobei sowohl die Oberschiene (1), als auch die Unterschiene (2) im wesentlichen zueinander parallel verlaufende oder sich öffnende seitliche Schenkel (8,9; 7,10) aufweisen und die einander zugeordneten seitlichen Schenkel (7,8; 9,10) der Ober- und Unterschiene (1,2) im wesentlichen in die gleiche Richtung weisen und die seitlichen Schenkel (8,9) der Oberschiene (1) im wesentlichen spiegelsymmetrisch zueinander angeordnet sind und zumindest teilweise in den von den seitlichen Schenkeln (7,10) der Unterschiene (2) begrenzten Raum (30) eintauchen, dadurch **gekennzeichnet**, daß die Oberschiene (1) und die Unterschiene (2) jeweils ein nach oben offenes, im wesentlichen U-förmiges Profil aufweisen und daß in dem nach oben geöffneten Raum (31) der Oberschiene (1) Teile für eine Vertikalverstellung angeordnet sind.

2. Gleitschienensystem nach Anspruch 1, dadurch **gekennzeichnet**, daß gegeneinander gerichtete Vorsprünge an den seitlichen Schenkeln der (12,13 bzw. 11,14) der Unterschiene (2) und Oberschiene (1) hintereinandergreifen und ein Ausheben der Oberschiene (1) aus der Unterschiene (2) verhindern.

3. Gleitschienensystem nach einem der Ansprüche 1 und 2, dadurch **gekennzeichnet**, daß die Unterschiene (2) an den offenen Enden der seitlichen Schenkel (7,10) nach innen und nach unten schräg geneigte Vorsprünge (11,12) besitzt, denen schräg nach oben und außen geneigte Vorsprünge (13,14) der Oberschiene (1) entsprechen.

4. Gleitschienensystem nach Anspruch 2 oder 3, dadurch **gekennzeichnet**, daß zwischen den Vorsprüngen (12,13 bzw. 11,14) der Unterschiene (1) und der Oberschiene (2) Gleitmittel (3,6) eingefügt sind.

5. Gleitschienensystem nach Anspruch 4, dadurch **gekennzeichnet**, daß über dem Vorsprung (13,14) der Oberschiene (1) ein Gleitwinkel (3,6) angeordnet ist, der den Vorsprung (13,14) gegenüber dem Seitenschenkel (7,10) der Unterschiene (2) und insbesondere gegenüber dem Vorsprung (11,12) der Unterschiene (2) gleitend im Abstand hält.

6. Gleitschienensystem nach einem der vorangegangenen Ansprüche, dadurch **gekennzeichnet**, daß die Oberschiene (1) gegenüber der Unterschiene (2) durch Wälzkörper (4,5), insbesondere Rollen oder Kugeln, gleitend abgestützt ist.

7. Gleitschienensystem nach einem der Ansprüche 1 bis 6, dadurch **gekennzeichnet**, daß die die seitlichen Schenkel (7,10 bzw. 8,9) miteinander verbindenden Mittelschenkel (17,16) einander entsprechende, geneigte Laufflächen (26,28 bzw. 27,29) im Bereich des Übergangs zu den Seitenschenkeln (7 bis 10) aufweist, die als Anlageflächen der Wälzkörper (4,5) dienen.

8. Gleitschienensystem nach einem der Ansprüche 6 oder 7, dadurch **gekennzeichnet**, daß zumindest bei der einer der Schenkel (7,8) der Unterschiene (2) in Schienenlängsrichtung laufende, die Laufflächen (26 bis 29) zur Mitte der Schiene (2) begrenzende, nach unten bzw. oben gerichtete Ansätze (18,19 bzw. 20,21) vorgesehen sind, die eine mögliche seitliche Bewegung der Wälzkörper (4,5) begrenzen.

9. Gleitschienensystem nach Anspruch 8, dadurch **gekennzeichnet**, daß an der Unterschiene (2) nach oben gerichtete Ansätze (18,19) sowie an der Oberschiene (1) nach unten gerichtete Ansätze (20,21) vorgesehen sind und daß die Wälzkörper durch von einem Käfig beabstandete Kugeln (4,5) sind.

10. Gleitschienensystem nach Anspruch 8, dadurch **gekennzeichnet**, daß die Wälzkörper durch einen Käfig beabstandete zylinderförmige oder tonnenförmige Walzen (4,5) sind und daß zwischen die Vorsprünge (22,32 bzw. 23,33) von Unterschiene (2) und Oberschiene (1) Wälzkörper, vorzugsweise Kugeln (24,25), zur gleitenden Abstützung bei einer nach oben gerichteten Bewegung der Oberschine (1) vorgesehen sind.

11. Gleitschienensystem nach einem der vorangegangenen Ansprüche, dadurch **gekennzeichnet**, daß der Abstand der Mittelschenkel (16,17) derart gewählt ist, daß er Raum (30) für Befestigungsmittel der Unterschiene (2) am Boden bzw. Antriebsmittel, wie Horizontalgetriebe, Spindel, läßt.

12. Gleitschienensystem nach einem der vorangegangenen Ansprüche, dadurch **gekennzeichnet**, daß der Mittelschenkel (1) der Oberschiene einen zwischen die Wälzkörper (4,5) ragende Einsenkung besitzt.

13. Gleitschienensystem nach einem der vorangegangenen Ansprüche, dadurch **gekennzeichnet**, daß die Unterschiene (2) sich in deren Längsrichtung erstreckende seitliche Auskragungen und/oder Einsenkungen aufweist, über welche die Unterschiene (2) formschlüssig, etwa durch eine Schwalbenschwanzverbindung, am Boden befestigbar ist.

14. Gleitschienensystem nach einem der vorangegangenen Ansprüche, dadurch **gekennzeichnet**, daß zumindest eine der Schienen (1 bzw. 2) aus Blechformteilen gebildet ist.

15. Gleitschienensystem nach einem der vorangegangenen Ansprüche, dadurch **gekennzeichnet**, daß die U-förmig nach innen gekrümmten Enden der Schenkel der Unterschiene (2) die Schenkelenden der Oberschiene (1) umfassen.

16. Gleitschienensystem nach einem der vorangegangenen Ansprüche, dadurch **gekennzeichnet**, daß an den Scheitelpunkten der U-förmigen Schienen (1,2) diese gegeneinander durch Gleitelemente abgestützt sind und daß die U-förmige Umfassung (40) der Unterschiene (2) auf den Schenkelenden der Oberschiene (1) über Gleitelemente (41) abgestützt ist.

## Claims

1. Seat slide assembly for the longitudinal guide of a seat, in particular an automotive vehicle seat, including a top slide rail and a bottom slide rail (1,2), wherein the top slide rail is coupled to the vehicle seat upper part and is guided in the bottom slide rail (2) by means of slide elements, wherein both the top slide rail (1) and the bottom slide rail (2) include substantially parallel extending or opening lateral legs (8,9; 7,10) and the associated lateral legs (7,8; 9,10) of the top and bottom slide rails (1,2) point substantially in the same direction, and the lateral legs (8,9) of the upper slide rail (1) are arranged substantially mirror-symmetrical and extend at least in part into the space (30) defined by the lateral legs (7,10) of the bottom slide rail (2),
**characterized** in that the top slide rail (1) and the bottom slide rail (2) each have an upwardly open, generally U-shaped profile, and in that parts for a vertical adjustment are accommodated in the space (31) of the top slide rail (1) which is open in an upward direction.

2. Seat slide assembly as claimed in claim 1,
**characterized** in that facing projections on the lateral legs (12,13 and 11,14, respectively) of the bottom slide rail (2) and the top slide rail (1) backgrip each other and prevent disengagement of the top slide rail (1) from the bottom slide rail (2).

3. Seat slide assembly as claimed in any one of claims 1 and 2,
**characterized** in that the bottom slide rail (2) has inwardly and downwardly inclined projections (11,12) at the open ends of the lateral legs (7,10) which have mating upwardly and outwardly inclined projections (13,14) of the top slide rail (1).

4. Seat slide assembly as claimed in claim 2 or claim 3,
**characterized** in that glide means (3,6) are interposed between the projections (12,13 or 11,14, respectively) of the bottom slide rail (1) and the top slide rail (2).

5. Seat slide assembly as claimed in claim 4,
**characterized** in that a gliding angle (3,6) is arranged on top of the projection (13,14) of the top slide rail (1) and keeps the projection (13,14) slidingly spaced from the lateral leg (7,10) of the bottom slide rail (2) and, more particularly, from the projection (11,12) of the bottom slide rail (2).

6. Seat slide assembly as claimed in any one of the preceding claims,
**characterized** in that the top slide rail (1) is slidingly supported with respect to the bottom slide rail (2) by roll bodies (4,5), in particular by rollers or balls.

7. Seat slide assembly as claimed in any one of claims 1 to 6,
**characterized** in that the intermediate legs (17,16) which interconnect the lateral legs (7,10 and 8,9, respectively) have corresponding inclined running surfaces (26,28 and 27,29, respectively) in the area of the transition to the lateral legs (7 to 10) which serve as abutment surfaces of the roll bodies (4,5).

8. Seat slide assembly as claimed in any one of claims 6 or 7,
**characterized** in that at least one of the legs (7,8) of the bottom slide rail (2) is provided with downwardly or upwardly directed projections (18,19 and 20,21, respectively) which extend in the longitudinal direction of the rails, confine the running surfaces (26 to 29) towards the middle of the rail (2) and limit a possible lateral movement of the roll bodies (4,5).

9. Seat slide assembly as claimed in claim 8,
**characterized** in that the bottom slide rail (2) includes upwardly directed projections (18,19) and the top rail (1) includes downwardly directed projections (20,21), and in that the roll bodies are balls (4,5) spaced by a cage.

10. Seat slide assembly as claimed in claim 8,
**characterized** in that the roll bodies are cylindrical or drum-shaped rollers (4,5) spaced by a cage, and in that roll bodies, preferably balls (24,25), are arranged intermediate the projections (22,32 and 23,33, respectively) on the bottom slide rail (2) and the top slide rail (1), for the sliding support during an upwardly directed movement of the top slide rail (1).

11. Seat slide assembly as claimed in any one of the preceding claims,
**characterized** in that the distance between the intermediate legs (16,17) is chosen such that it leaves space (30) for fastening means of the bottom slide rail (2) on the bottom, or for drive means, such as a horizontal gear or a spindle.

12. Seat slide assembly as claimed in any one of the preceding claims,
**characterized** in that the intermediate leg (1) of the top slide rail has an indentation extending between the roll bodies (4,5).

13. Seat slide assembly as claimed in any one of the preceding claims,
**characterized** in that the bottom slide rail (2) has longitudinally extending lateral collars and/or indentations by which the bottom slide rail (2) can be engaged on the bottom in a form-lock manner, by a dovetail connection, for example.

14. Seat slide assembly as claimed in any one of the preceding claims,
**characterized** in that at least one of the slide rails (1 or 2, respectively) is formed of sheet-metal shaped parts.

15. Seat slide assembly as claimed in any one of the preceding claims,
**characterized** in that the ends of the legs of the bottom slide rail (2), which ends are curved inwardly like a U, embrace the leg ends of the top slide rail (1).

16. Seat slide assembly as claimed in any one of the preceding claims,
**characterized** in that the U-shaped slide rails (1,2), at their vertex, are supported with respect to each other by slide elements, and in that the U-shaped bow (40) of the bottom slide rail (2) is supported on the leg ends of the top slide rail (1) by way of slide elements (41).

## Revendications

1. Système de glissières pour le guidage longitudinal d'un siège, notamment d'un siège de véhicule automobile, comprenant une glissière supérieure et une glissière inférieure (1, 2), la glissière supérieure étant fixée à la partie supérieure de siège et étant guidée dans la glissière inférieure (2) au moyen d'éléments de glissement, tandis qu'aussi bien la glissière supérieure (1) que la glissière inférieure (2) comportent des ailes latérales (8, 9 ; 7, 10) orientées ou s'ouvrant d'une manière essentiellement parallèle entre elles et que les ailes latérales (7, 8; 9, 10) mutuellement associées des glissières supérieure et inférieure (1, 2) sont orientées essentiellement dans la même direction, les ailes latérales (8, 9) de la glissière supérieure (1) étant disposées d'une manière essentiellement symétrique l'une de l'autre par rapport à un plan et s'enfonçant au moins partiellement dans l'espace (30) délimité par les ailes latérales (7, 10) de la glissière inférieure (2), caractérisé en ce que la glissière supérieure (1) et la glissière inférieure (2) ont chacune une forme profilée essentiellement en U et ouverte vers le haut et en ce que des pièces prévues pour un réglage de position verticale sont disposées dans l'espace (31) de la glissière supérieure (1) qui est ouvert vers le haut.

2. Système de glissières selon la revendication 1, caractérisé en ce que des parties en saillie orientées les unes vers les autres et situées sur les ailes latérales (respectivement 12, 13 et 11, 14) de la glissière inférieure (2) et de la glissière supérieure (1) s'accrochent les unes derrière les autres et empêchent la glissière supérieure (1) de se soulever hors de la glissière inférieure (2).

3. Système de glissières selon l'une des revendications 1 et 2, caractérisé en ce qu'aux extrémités ouvertes des ailes latérales (7, 10), la glissière inférieure (2) comporte des parties en saillie inclinées en pente vers l'intérieur et vers le bas auxquelles correspondent des parties en saillie (13, 14) de la glissière supérieure (1) qui sont inclinées en pente vers le haut et vers l'extérieur.

4. Système de glissières selon la revendication 2 ou 3, caractérisé en ce que des moyens de glissement (3, 6) sont interposés entre les parties en saillie (respectivement 12, 13 et 11, 14) de la glissière inférieure (1) et de la glissière supérieure (2).

5. Système de glissières selon la revendication 4, caractérisé en ce qu'une cornière de glissement (3, 6) est disposée par-dessus la partie en saillie (13, 14) de la glissière supérieure (1), la cornière de glissement (3, 6) maintenant la partie en saillie (13, 14), d'une manière coulissante, à distance de l'aile latérale (7, 10) de la glissière inférieure (2) et notamment de la partie en saillie (11, 12) de la glissière inférieure (2)

6. Système de glissières selon l'une des revendications précédentes, caractérisé en ce que la glissière supérieure (1) est en appui coulissant vis-à-vis de la glissière inférieure (2) au moyen de corps de roulement (4, 5), notamment de rouleaux ou de billes.

7. Système de glissières selon l'une des revendications 1 à 6, caractérisé en ce que l'aile centrale (17, 16) qui relie entre elles les ailes latérales (respectivement 7, 10 et 8, 9) comporte, dans la zone de la transition avec les ailes latérales (7 à 10), des surfaces de roulement (respectivement 26, 28 et 27, 29) qui sont inclinées et se correspondent et qui servent de surface d'appui des corps de roulement (4, 5).

8. Système de glissières selon l'une des revendications 6 et 7, caractérisé en ce qu'au moins pour l'une des ailes latérales (7, 8) de la glissière inférieure (2),il est prévu des parties en saillie (respectivement 18, 19 et 20, 21) orientées vers le bas ou vers le haut qui s'étendent suivant la direction longitudinale de la glissière et délimitent les surfaces de roulement (26 à 29) en direction du milieu du de la glissière (2) et qui limitent un mouvement transversal possible des corps de roulement (4, 5).

9. Système de glissières selon la revendication 8, caractérisé en ce qu'il est prévu, sur la glissière inférieure (2), des parties en saillie (18, 19) orientées vers le haut et, sur la glissière supérieure (1), des parties en saillie (20, 21) orientées vers le bas et en ce que les corps de roulement sont des billes (4, 5) espacées au moyen d'une cage.

10. Système de glissières selon la revendication 8, caractérisé en ce que les corps de roulement sont des rouleaux (4, 5) en forme de cylindre ou en forme de tonneau espacés au moyen d'une cage et en ce que des corps de roulement, de préférence des billes (24, 25), sont prévus entre les parties en saillie (respectivement 22, 32 et 23, 33) de la glissière inférieure (2) et de la glissière supérieure (1) en vue d'un appui glissant dans le cas d'un mouvement de la glissière supérieure (1) qui est dirigé vers le haut.

11. Système de glissières selon l'une des revendications précédentes, caractérisé en ce que la distance séparant les ailes centrales (16, 17) est choisie de façon à offrir un espace (30) pour des moyens de fixation de la glissière inférieure (2) au plancher ou pour des moyens d'entraînement, tels que mécanisme d'actionnement horizontal, tige filetée.

12. Système de glissières selon l'une des revendications précédentes, caractérisé en ce que l'aile centrale (1) de la glissière supérieure comporte une partie repoussée faisant saillie entre les corps de roulement (4, 5).

13. Système de glissières selon l'une des revendications précédentes, caractérisé en ce que la glissière inférieure (2) comporte des parties en saillie et/ou parties repoussées latérales qui s'étendent suivant sa direction longitudinale et au moyen desquelles la glissière inférieure (2) peut être fixée sur le plancher par complémentarité de formes, par exemple au moyen d'un assemblage en queue-d'aronde.

14. Système de glissières selon l'une des revendications précédentes, caractérisé en ce qu'au moins l'une des glissières (1 ou 2) est formée de pièces en tôle façonnées.

15. Système de glissières selon l'une des revendications précédentes, caractérisé en ce que les extrémités des ailes de la glissière inférieure (2) qui sont cintrées vers l'intérieur en forme de U entourent les extrémités d'aile de la glissière supérieure (1).

16. Système de glissières selon l'une des revendications précédentes, caractérisé en ce qu'aux sommets des glissières en U (1, 2), ces glissières sont en appui l'une sur l'autre au moyen d'éléments de glissement et en ce que l'entourage en U (40) de la glissière inférieure (2) est en appui sur les extrémités d'aile de la glissière supérieure (1) par l'intermédiaire d'éléments de glissement (41).
